# EUROPÄISCHE PATENTSCHRIFT

(11) **EP 1 984 973 B1**
(45) Veröffentlichungstag und Bekanntmachung des Hinweises auf die Patenterteilung: **29.08.2012**
(21) Anmeldenummer: 07700139.4
(22) Anmeldetag: 04.01.2007
(51) Int. Cl.: H01M 8/18, H01M 10/36, H01M 10/42

(54) **REDOXAKKUMULATOR MIT TRENNELEKTRODE**
REDOX ACCUMULATOR COMPRISING A SEPARATION ELECTRODE
ACCUMULATEUR REDOX DOTÉ D'ÉLECTRODES DE SÉPARATION

(30) Priorität: 15.02.2006 DE 102006007206
(43) Veröffentlichungstag der Anmeldung: 29.10.2008
(73) Patentinhaber: Henze, Werner, 30916 Isernhagen (DE)
(72) Erfinder: Henze, Werner, 30916 Isernhagen (DE)
(86) Internationale Anmeldenummer: PCT/DE2007/000003
(87) Internationale Veröffentlichungsnummer: WO 2007/093142

(56) Entgegenhaltungen:
- WO-A-02/065571
- WO-A-2006/128406
- DE-A1- 10 131 822
- DE-A1- 10 342 889
- A.F.HOLLEMANN, E.WIBERG: "Lehrbuch der anorganischen Chemie" 1971, WALTER DE GRUYTER & CO , BERLIN , XP002431006 Seite 838, Absatz 2

## Beschreibung

Bekannte Redoxakkumulatoren sind beispielsweise auf den Seiten 159 bis 162 in dem Buch "Batterien und Akkumulatoren" von L. F. Trueb und P. Rüetschi, Springer Verlag, 1998, beschrieben. In den heute üblichen, kommerziellen Akkumulatoren besteht die negative Elektrode aus einem Metall, einer Graphitlnterkalationsverbindung oder einer Metall-Wasserstoffverbindung. Bei der Entladung werden unter Abgabe von Elektronen an den äußeren Stromkreis Metallionen oder Protonen gebildet. Die positive Elektrode besteht meistens aus einem Oxid, das bei der Entladung durch Elektronenaufnahme reduziert wird. Beim Laden verlaufen diese Reaktionen in umgekehrter Richtung. Im Laufe der Lade/Entladezyklen sind die Elektroden ständig chemischen Umwandlungsprozessen ausgesetzt, wodurch sie sich mit der Zeit irreversibel verändern. Aktive Masse und/oder Reaktionsprodukte werden inaktiv oder sammeln sich am Boden an, was einen Leistungsabfall (Alterung) bewirkt. Die in dem Akkumulator gespeicherte Energiemenge ist durch die Masse der Elektroden gegeben.

Die heute bekannten Redoxakkumulatoren umgehen die obigen Nachteile. Sie bestehen aus inerten Elektroden (beispielsweise aus Graphit) und einem in zwei Kammern aufgeteilten Elektrolytraum. Darin befinden sich wässerige Lösungen von Salzen in verschiedenen Oxidationszuständen. Beim Entladen werden an der negativen Elektrode Ionen des einen Salzes in einen höheren Oxidationszustand gebracht (beispielsweise Cr²⁺ zu Cr³⁺), während an der positiven Elektrode Ionen des anderen Salzes reduziert werden (beispielsweise Fe³⁺ zu Fe²⁺). Man geht also nie bis zur metallischen Stufe, sondern alterniert zwischen verschiedenen Oxidationszuständen von Ionen. Die beim Entladen energieliefemden und beim Laden energiespeichernden Prozesse laufen alle in der Lösung ab, genauer gesagt an der Grenzfläche Elektrode/Elektrolyt. Die Elektroden nehmen aber nicht an den elektrochemischen Reaktionen teil, sie dienen lediglich zur Stromabnahme bzw. -zufuhr.

Der bekannte Eisen-Chrom-Redox-Akkumulator speichert Energie in Form verschiedener Oxidationszustände der Eisen- und Chromionen. Seine Kapazität ist im Prinzip nur durch das verfügbare Volumen der Elektrolytlösungen beschränkt; zudem kann man Reserveelektrolyte außerhalb des Akkumulators lagern und bei Bedarf, zum Laden und Entladen, durch das Zellsystem pumpen. Solange die Elektrolyte verfügbar sind, kann Strom erzeugt werden. Ein voll entladener Akkumulator lässt sich durch Füllen mit frischen Elektrolyten sofort wieder aktivieren. Der stets lange dauernde Ladeprozess konventioneller Akkumulatoren kann auf diese Weise zeitlich und räumlich verlagert werden.
Das "mechanische Laden" des Redoxakkumulators ist also problemlos durchführbar, weil lediglich Flüssigkeiten nachbezogen werden müssen.

Bekannt ist auch ein Redoxakkumulator, der die verschiedenen Oxidationszustände des Vanadiums nutzt. An der negativen Elektrode wird beim Entladen zweiwertiges Vanadium V²⁺ zur dreiwertigen Stufe V³⁺ oxidiert, an der positiven Elektrode wird fünfwertiges Vanadium V⁵⁺ zu vierwertigen Vanadium V⁴⁺ reduziert. Beim Laden werden diese Reaktionen umgekehrt. Vorteilhaft ist, dass in beiden Halbzellen Ionen des gleichen Metalls eingesetzt werden und dass die Diffusion in das andere Abteil also keine Kontamination bedeutet, sondern nur die Selbstentladung zur Folge hat. Die beiden Elektrolyte haben im Prinzip eine unbeschränkte Lebensdauer, weil bei der Regeneration die elektrochemische Oxidation bzw. Reduktion zum gewünschten Vanadiumion von jeder Oxidationsstufe ausgehend problemlos abläuft. Die elektrolytische Aufbereitung der gebrauchten Elektrolyte erfolgt wesentlich schneller als das Aufladen eines Bleiakkumulators. Die Zahl der Tiefentladungen ist unbeschränkt, die vollständige Entladung schadet dem Akkumulator in keiner Weise. Seine Lebensdauer wird jedoch durch die beim Überladen auftretende Oxidation der Graphitfilzelektrode begrenzt.

Aus der DE 101 31 822 A1 ist eine elektrochemische Energie speichernde Zelle aus einer kathodenseitigen und einer anodenseitigen Teilzelle mit dazwischen angeordneter Wasserstoffelektrode bekannt. Die Wasserstoffelektrode ist leitfähig für Wasserstoffionen und Elektronen, verhindert eine Vermischung und ist chemisch beständig gegenüber Laugen und Säuren. Die Anode umfasst Graphit und die Kathode besteht aus Eisen und Eisen(II)-hydroxid oder einer Mischung aus Zink und Zinkat.

Außer den beschriebenen Vorteilen der bekannten Redoxakkumulatoren weisen diese auch diverse Nachteile auf.

Im Fall des Eisen-Chrom-Redoxakkumulators vermischen sich mit der Zeit die Elektrolyte in den beiden Kammern, weil die Trennmembran für Metallionen nicht ganz undurchlässig ist. Im Fall des Vanadium-Redoxakkumulators erfolgt analog dazu eine hohe Selbstentladung. Die Trennmembran ist selektiv ionendurchlässig, nämlich für negativ geladene Ionen, sie ist selbst nicht elektrisch leitend. Nachteilig ist also die Bedingung, dass die negativ geladenen Ionen in den beiden Kammern dieselben sein müssen und dass die Trennmembran nur für diese Ionen durchlässig sein muss. Wertigkeitsänderungen von Metallionen in negativ geladenen Ionen von Salzen können deshalb bei den bekannten Redoxakkumulatoren nicht genutzt werden. Hinzu kommt, dass die Trennmembran den Widerstand der Zelle erhöht und einer gewissen Alterung unterworfen ist. Weiterhin hat sich die speicherbare spezifische Energie in der Praxis als vergleichsweise unzureichend erwiesen, weil die durch die Wertigkeitsänderungen der Metallionen erreichten Potentialdifferenzen noch zu gering sind. Außerdem sollten die Preise der Elektrolytsalze für einen Masseneinsatz preiswert sein, wovon bei den nachfolgend angegeben manganhaltigen Salzen ausgegangen werden kann.

Der Erfindung liegt die Aufgabe zugrunde ein Redoxakkumulatorsystem anzugeben, bei dem die Nachteile der bekannten Redoxakkumulatoren vermieden werden.

Eine grundlegende Weiterentwicklung der Redoxakkumulatoren war insbesondere deshalb nicht möglich, weil ein lonenaustausch zwischen beiden Elektrolyten und noch dazu ein ganz bestimmter erfolgen muss. Wie bei allen Redoxakkumulatoren weist der erfindungsgemäße Redoxakkumulator zwei separate Kammern auf, die nicht durch eine Trennmembran, sondern durch eine Zwischenelektrode verbunden sind. Die Zwischenelektrode ist elektrisch leitend und kann Wasserstoffatome aufnehmen und abgeben. Sie besteht aus einer säure- und laugenbeständigen, wasserabweisenden und nicht porösen Kunststofffolie, die vorzugsweise eine Mischung aus Eisen(II/III)-oxid (Fe₃O₄) und Graphit (C) enthält. Geeignet ist beispielsweise eine Teflonfolie, die diese Mischung enthält und deshalb zwischen ihren beiden Oberflächen elektrisch leitend ist. Im Versuch wurde ein mit Hartwachs getränktes Mineralfaserband benutzt, in das im warmen Zustand die Fe₃O₄/C-Mischung gepresst wurde. Die Trennelektrode nimmt beim Laden und Entladen entladene Wasserstoffionen im "Status nascendi" (im ersten Augenblick atomar oder doch wenigstens in einem angeregten Zustand) auf. Der Transport der Wasserstoffatome erfolgt durch Ladungsaustausch mit dem Eisenoxid (Fe₃O₄) und Graphit (C) auf ionischem Wege. Außer der genannten speziellen Kunststofffolie ist auch eine Platin- oder Palladium-Trennschicht möglich, die äußerst geringe Stärke haben darf. Graphit besitzt gegenüber Fe₃O₄ eine relativ gute elektrische Leitfähigkeit, so dass die Mischung aus beiden ebenfalls gut elektrisch leitend ist. Fe₃O₄ hat den Vorteil, dass es sehr gut Wasserstoffatome aufnehmen kann (vgl. Anorganische Materialien, Mark T. Weller, VCH-Verlag, S. 35/36, Einlagerungen in Metalloxide). Außerdem verhalten sich Fe₃O₄ und Graphit gegenüber den in den Elektrolyten enthaltenden Chemikalien chemisch inert. Die Trennelektrode erlaubt es, in den beiden Kammern Elektrolyte zu verwenden, die unterschiedliche negativ und positiv geladene Ionen haben. Zulässig ist deshalb beispielsweise das negativ geladene Ion (OH)⁻ in einer Kammer und das Ion (SO₄)²⁻ in der anderen Kammer. Wie bei den bekannten Redoxakkumulatoren bestehen die positive und die negative Elektrode aus Graphit bzw. aus Graphitfilz. Im nachfolgenden Funktionsbeispiel enthält eine Kammer in Wasser gelöstes Kaliumhydroxid (KOH) und die andere Kammer wässerige Schwefelsäure (H₂SO₄). Jede Kammer enthält manganhaltige Salze, deren negative Ionen Manganionen in unterschiedlichen Wertigkeitsstufen enthalten.

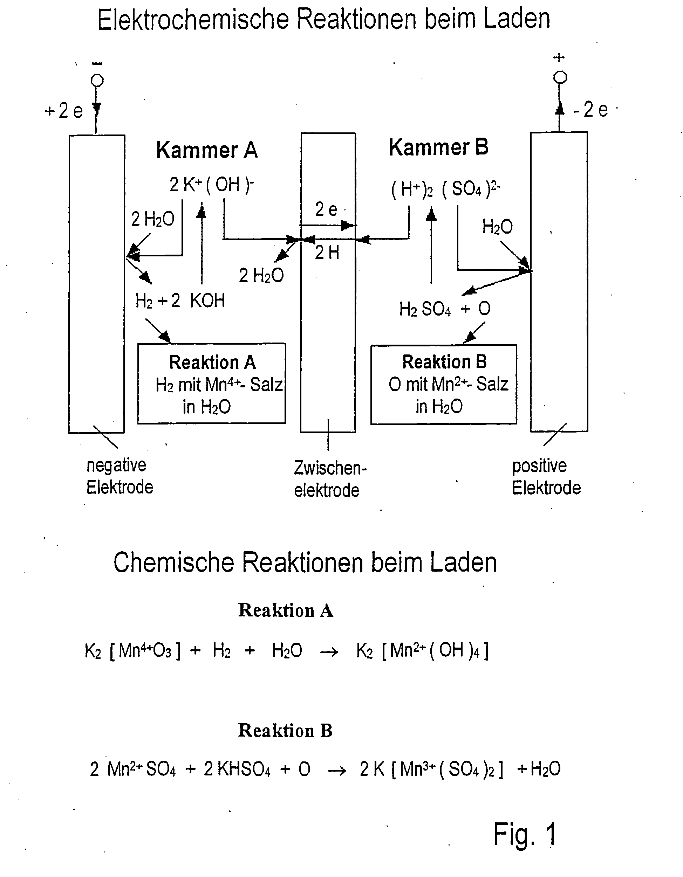

In Fig. 1 ist der Ladevorgang des erfindungsgemäßen Redoxakkumulators dargestellt. Der Akkumulator besteht aus der negativen und positiven Elektrode, der Zwischenelektrode und aus den Kammern A und B, die die Elektrolyte beinhalten. Die Kammer A, die von der negativen Elektrode und der Zwischenelektrode eingegrenzt wird, enthält eine wässerige KOH-Lösung, in der im ungeladenen Zustand das Salz K₂[Mn⁴⁺O₃] der nicht existierenden Mangansäure H₂[MnO₃] gelöst ist. Die Kammer B befindet sich zwischen der Trennelektrode und der positiven Elektrode. Sie enthält Wasser, Schwefelsäure und im ungeladenen Zustand die manganhaltigen Salze Mn²⁺SO₄ und KHSO₄. Beim Ladevorgang wird Wasser zersetzt, wobei die Wasserstoffkomponente eine Verbindung mit dem Salz in der Kammer A eingeht und die Sauerstoffkomponente die beiden Salze in der Kammer B zu einem Komplexsalz der Zusammensetzung K[Mn³⁺(SO₄)₂] oxidiert. Die Wertigkeit des Mangans ändert sich dabei in der Kammer A von vier auf zwei und in der Kammer B von zwei auf drei, was eine Potentialdifferenz zwischen der negativen und positiven Elektrode von maximal 2,75 V bewirkt.

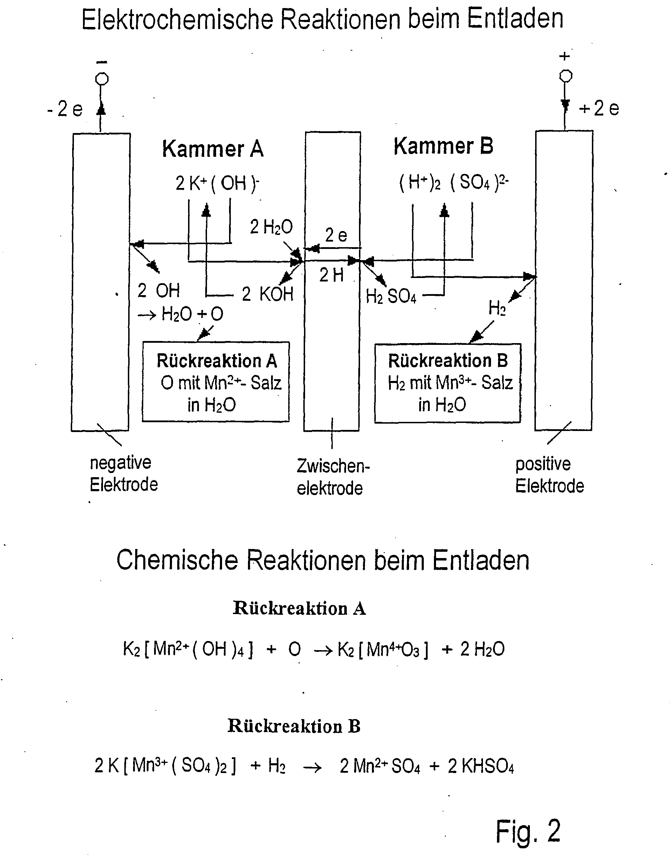

In Fig. 2 ist der Entladevorgang des erfindungsgemäßen Redoxakkumulators dargestellt. Entgegen dem Ladevorgang entsteht an der negativen Elektrode in der Kammer A Sauerstoff (O), der mit dem beim Laden gebildeten Salz K₂[Mn²⁺(OH)₄] reagiert und wieder Wasser und das Salz K₂[Mn⁴⁺O₃] entstehen lässt. Mit dem an der positiven Elektrode entstandenen Wasserstoff in der Kammer B wird das Salz K[Mn³⁺(SO₄)₂] wieder zu den Salzen Mn²⁺SO₄ und KHSO₄.

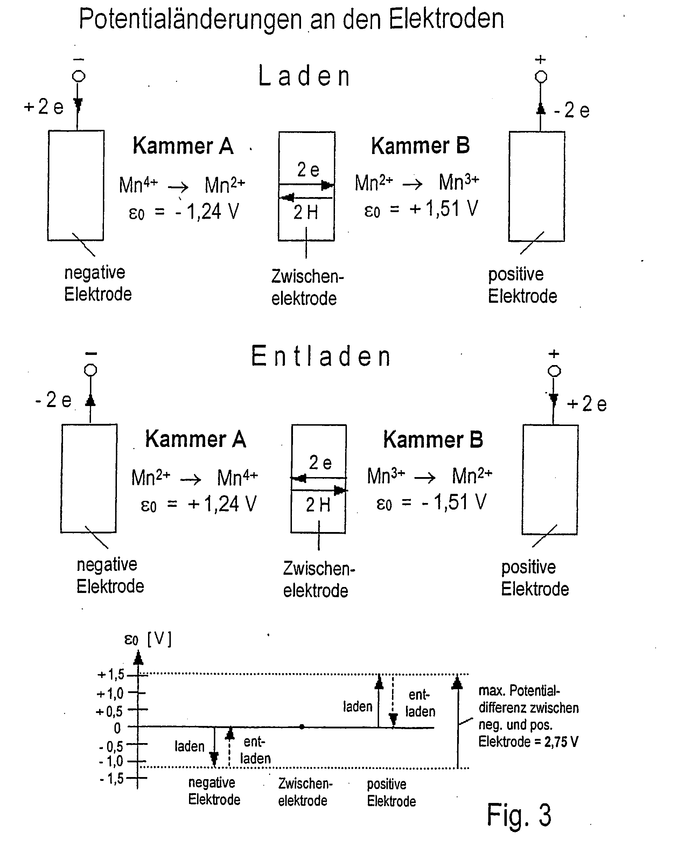

In Fig. 3 sind beim Laden und Entladen des erfindungsgemäßen Redoxakkumulators die Potentialänderungen dargestellt, die durch die Wertigkeitsänderungen des Manganions in den beiden Kammern stattfinden. Im geladenen Zustand stellt sich im Leerlauf zwischen der negativen und positiven Elektrode eine Spannungsdifferenz von 2,75 V ein. Sie ergibt sich nach dem Laden aus den Normalpotentialen *ε*₀= -1,24 V in der Kammer A und *ε*₀= -1,51 V in der Kammer B. Wie auf den Seiten 161 und 162 des zuvor genannten Buches "Batterien und Akkumulatoren" angegeben ist, beträgt die Leerlaufspannung des Vanadium-Redoxakkumulators 1,6 V (im Betrieb ca. 1,33 V, s. S. 162). Außerdem ist angegeben, dass die spezifische Energie (Wh/kg) des Vanadium-Redoxakkumulators etwa der eines Bleiakkumulators entspricht. Weil insbesondere beim erfindungsgemäßen Redoxakkumulator im aufgeladenen Zustand eine sehr viel höhere Leerlaufspannung in Höhe von 2,75 V vorhanden ist, ergibt sich bei ihm gegenüber dem Vanadium-Redoxakkumulator theoretisch eine Steigerung der spezifischen Energie von ca. 70%.

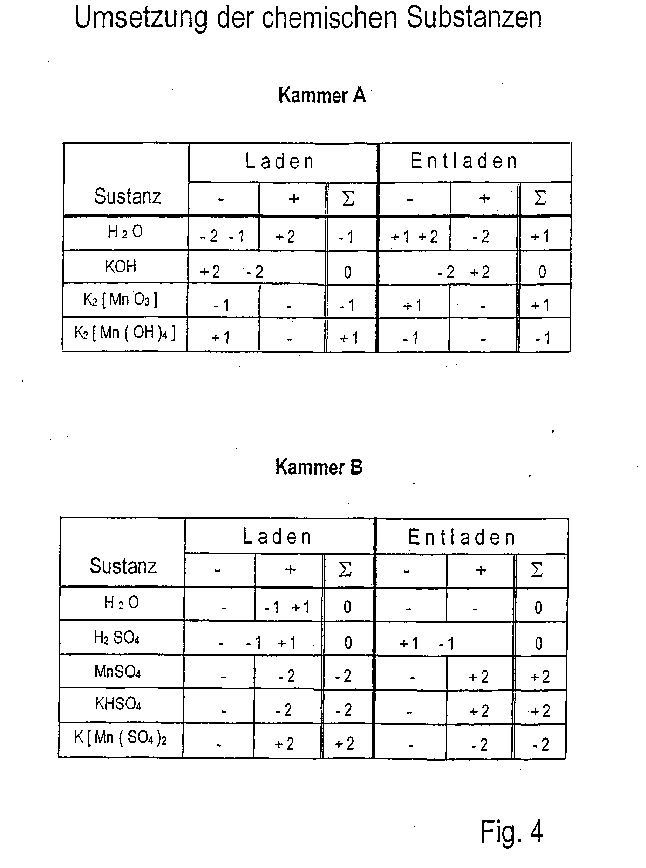

In Fig. 4 ist die Anzahl der Moleküle beim Laden und Entladen für die Substanzen in den Kammern A und B angegeben, die durch den Stromfluss von zwei Elektronen bewirkt wird. Es ist zu erkennen, dass Wasser beim Laden der Kammer A entzogen und beim Entladen wieder zugesetzt wird. Außerdem fällt auf, dass sich die Anteile der Base KOH in der Kammer A und die der Säure H₂SO₄ in der Kammer B während des Lade- und Entladevorganges nicht ändern.

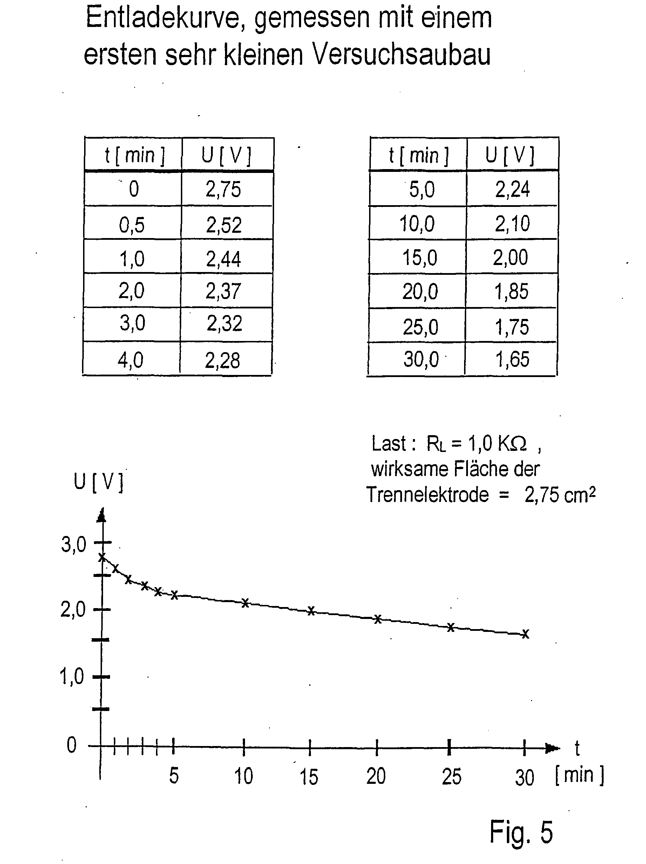

In Fig. 5 ist die Entladekurve, die mit einem ersten sehr kleinen Versuchsaufbau gemessen wurde, dargestellt. Das Volumen jeder Kammer betrug 12 ml und die wirksame Fläche der Trennelektrode 2,75 cm². Der Lastwiderstand hatte einen konstanten Wert von 1,0 kΩ. Ein optimaler Aufbau und eine ideale mengenmäßige Zusammensetzung der Elektrolyte bestanden nicht.

## Patentansprüche

1. Redoxakkumulator, bestehend aus einer ersten Kammer (A), die einen ersten Elektrolyten und eine erste inerte Elektrode enthält, und einer zweiten Kammer (B), die einen zweiten Elektrolyten und eine zweite inerte Elektrode enthält, wobei die erste Elektrode den Minuspol und die zweite Elektrode den Pluspol bildet, die Kammern aneinandergrenzen, die Elektrolyte durch eine gemeinsame spezielle Wand der Kammern getrennt sind und aus wässrigen Lösungen bestehen, die zumindest im teilweise geladenen Zustand des Redoxakkumulators metallhaltige lonenpaare mit unterschiedlichen Oxidationszuständen enthalten, **dadurch gekennzeichnet, dass** die spezielle Wand eine elektrisch leitende Zwischenelektrode umfasst, die entweder
a) aus einer säure- und laugenbeständigen, wasserabweisenden und nicht porösen Kunststofffolie besteht, wobei die Kunststofffolie eine Mischung aus Eisen(II/III)-oxid (Fe₃O₄) und Graphit (C) enthält, oder
b) aus einer Platin- oder Palladium-Trennschicht in Form einer Folie besteht.

2. Redoxakkumulator nach Anspruch 1, **dadurch gekennzeichnet, dass** im Falle einer Kunststofffolie der Kunststoff der Kunststofffolie PTFE ist.

3. Redoxakkumulator nach Anspruche 1 oder 2, **dadurch gekennzeichnet, dass** die Elektroden aus Graphit oder aus Graphitfilz bestehen.

4. Redoxakkumulator nach einem der Ansprüche 1 bis 3, **dadurch gekennzeichnet, dass** die metallhaltigen lonenpaare Anionen sind.

5. Redoxakkumulator nach einem der Ansprüche 1 bis 4, **dadurch gekennzeichnet, dass** die im ersten und im zweiten Elektrolyten enthaltenen metallhaltigen lonenpaare das gleiche Metall aufweisen.

6. Redoxakkumulator nach einem der Ansprüche 1 bis 5, **dadurch gekennzeichnet, dass** die erste Kammer (A) eine alkalische Lösung eines Mangansalzes mit dem Redoxpaar Mn⁴⁺/Mn²⁺ und die zweite Kammer (B) eine saure Lösung eines Mangansalzes mit dem Redoxpaar Mn³⁺/Mn²⁺ enthält.

7. Redoxakkumulator nach Anspruch 6, **dadurch gekennzeichnet, dass** die alkalische Lösung Kalilauge (KOH) und die saure Lösung verdünnte Schwefelsäure (H₂SO₄) ist.

8. Redoxakkumulator nach einem der Ansprüche 1 bis 7, **dadurch gekennzeichnet, dass** die erste Kammer (A) Kalilauge enthält, in der im ungeladenen Zustand des Redoxakkumulators das Salz K₂[Mn⁴⁺O₃] der nicht existierenden Mangansäure (H₂[MnO₃]) gelöst ist, und die zweite Kammer (B) verdünnte Schwefelsäure (H₂SO₄) enthält, in der im ungeladenen Zustand des Redoxakkumulators Mangansulfat (MnSO₄) sowie Kaliumhydrogensulfat (KHSO₄) gelöst sind.

9. Verfahren zur Umwandlung chemischer Energie in elektrische Energie und elektrischer Energie in chemische Energie mit einem Redoxakkumulator nach einem der Ansprüch1-8, bestehend aus einer ersten Kammer (A), die einen ersten Elektrolyten und eine erste inerte Elektrode enthält, und einer zweiten Kammer (B), die einen zweiten Elektrolyten und eine zweite inerte Elektrode enthält, wobei die erste Elektrode den Minuspol und die zweite Elektrode den Pluspol bildet, die Kammern aneinandergrenzen, die Elektrolyte durch eine gemeinsame spezielle Wand der Kammern getrennt sind und aus wässrigen Lösungen bestehen, die zumindest im teilweise geladenen Zustand des Redoxakkumulators metallhaltige lonenpaare mit unterschiedlichen Oxidationszuständen enthalten, wobei an der negativen Elektrode Redoxprozesse manganhaltiger Anionen in einer alkalischen Lösung herbeigeführt werden, in der die Wertigkeit der Manganionen zwischen den Werten 4+ und 2+ wechselt, und an der positiven Elektrode Redoxprozesse manganhaltiger Anionen in einer sauren Lösung herbeigeführt werden, in der die Wertigkeit der Manganionen zwischen den Werten 2+ und 3+ wechselt.

10. Verfahren nach Anspruch 9, **dadurch gekennzeichnet, dass** zur Umwandlung elektrischer Energie in chemische Energie durch Verbinden einer Energiequelle mit den Elektroden
a) an der negativen Elektrode
K₂[MnO₃] + H₂ + H₂O → K₂[Mn(OH)₄]
b) an der positiven Elektrode
2 MnSO₄ + 2 KHSO₄ + O → 2 K[Mn(SO₄)₂] + H₂O
umgesetzt werden und
zur Umwandlung von chemischer Energie in elektrische Energie durch Verbinden eines ohmschen Verbraucherwiderstands mit den Elektroden
c) an der negativen Elektrode
K₂[Mn(OH)₄] + O → K₂[MnO₃] + 2 H₂O
d) an der positiven Elektrode
2 K[Mn(SO₄)₂] + H₂ → 2 MnSO₄ + 2 KHSO₄
umgesetzt werden.

## Claims

1. A redox accumulator consisting of a first chamber (A), containing a first electrolyte and a first inert electrode, and of a second chamber (B), containing a second electrolyte and a second inert electrode, the first electrode forming the negative pole and the second electrode forming the positive pole, the chambers being adjacent, the electrolytes being separated by a common special wall of the chambers and consisting of aqueous solutions which, in at least the partially charged state of the redox accumulator, contain metalliferous ion pairs having various oxidation states, **characterised in that** the special wall includes an electroconductive intermediate electrode which consists of either
a) an acid-resistant and alkali-resistant, water-repellent and non-porous plastic film, the plastic film containing a mixture of ferrosoferric oxide (Fe₃O₄) and graphite (C), or
b) a platinum or palladium separating layer in the form of a film.

2. The redox accumulator according to claim 1, **characterised in that** in the case of a plastic film the plastic of the plastic film is PTFE.

3. The redox accumulator according to claim 1 or 2, **characterised in that** the electrodes consist of graphite or graphite felt.

4. The redox accumulator according to any one of claims 1 to 3, **characterised in that** the metalliferous ion pairs are anions.

5. The redox accumulator according to any one of claims 1 to 4, **characterised in that** the metalliferous ion pairs contained in the first and second electrolytes have the same metal.

6. The redox accumulator according to any one of claims 1 to 5, **characterised in that** the first chamber (A) contains an alkaline solution of a manganese salt with the redox couple Mn⁴⁺/Mn²⁺ and the second chamber (B) contains an acid solution of a manganese salt with the redox couple Mn³⁺/Mn²⁺.

7. The redox accumulator according to claim 6, **characterised in that** the alkaline solution is caustic potash (KOH) and the acid solution is diluted sulphuric acid (H₂SO₄).

8. The redox accumulator according to any one of claims 1 to 7, **characterised in that** the first chamber (A) contains caustic potash, in which the salt K₂[Mn⁴⁺O₃] of the non-existing manganous acid (H₂[MnO₃]) is dissolved in the uncharged state of the redox accumulator, and the second chamber (B) contains diluted sulphuric acid (H₂SO₄), in which manganese sulphate (MnSO₄) and potassium hydrogen sulphate (KHSO₄) are dissolved in the uncharged state of the redox accumulator.

9. A method for transforming chemical energy into electrical energy and electrical energy into chemical energy by means of a redox accumulator according to one of claims 1-8, consisting of a first chamber (A) containing a first electrolyte and a first inert electrode, and of a second chamber (B) containing a second electrolyte and a second inert electrode, the first electrode forming the negative pole and the second electrode forming the positive pole, the chambers being adjacent, the electrolytes being separated by a common special wall of the chambers and consisting of aqueous solutions which, in at least the partially charged state of the redox accumulator, contain metalliferous ion pairs having various oxidation states, wherein at the negative electrode are induced redox processes of manganese-containing anions in an alkaline solution, in which the valency of the manganese ions changes between the values 4+ and 2+, and at the positive electrode are induced redox processes of manganese-containing anions in an acid solution, in which the valency of the manganese ions changes between the values 2+ and 3+.

10. The method according to claim 9, **characterised in that**, in order to transform electrical energy into chemical energy by connecting an energy source with the electrodes, the following conversions take place
a) at the negative electrode
K₂[MnO₃] + H₂ + H₂O → K₂[Mn(OH)₄]
b) at the positive electrode
2 MnSO₄ + 2 KHSO₄ + O → 2 K[Mn(SO₄)₂] + H₂O
and
in order to transform chemical energy into electrical energy by connecting an ohmic consumer load resistance with the electrodes, the following conversions take place
c) at the negative electrode
K₂[Mn(OH)₄] + O → K₂[MnO₃] + 2 H₂O
d) at the positive electrode
2 K[Mn(SO₄)₂] + H₂ → 2 MnSO₄ + 2 KHSO₄.

## Revendications

1. Accumulateur redox-flow constitué par une première cambre (A) qui contient un premier électrolyte et une première électrode inerte et une seconde chambre (B) qui contient un second électrolyte et une seconde électrode inerte, la première électrode formant le pôle négatif et la seconde électrode le pôle positif, les chambres étant contiguës, les électrolytes étant séparés par une paroi commune spéciale des chambres et constitués de solutions aqueuses qui contiennent, au moins en état partiellement chargé de l'accumulateur redox-flow, des paires d'ions métallifères avec des états d'oxydation différents, **caractérisé en ce que** la paroi spéciale comprend une électrode intermédiaire électriquement conductrice, qui est constituée soit
a) par une feuille en matière artificielle résistante aux acides et aux bases, hydrophobe et non poreuse, la feuille en matière artificielle contenant un mélange d'oxyde de fer (II/III) (Fe₃O₄) et de graphite (C) ou
b) par une couche de séparation en platine ou palladium sous forme d'une feuille.

2. Accumulateur redox-flow suivant la revendication 1, **caractérisé en ce que**, dans le cas d'une feuille en matière artificielle, la matière artificielle est du PTFE.

3. Accumulateur redox-flow suivant les revendications 1 ou 2, **caractérisé en ce que** les électrodes sont en graphite ou en feutre de graphite.

4. Accumulateur redox-flow suivant une des revendications 1 à 3, **caractérisé en ce que** les paires d'ions métallifères sont des anions.

5. Accumulateur redox-flow suivant une des revendications 1 à 4, **caractérisé en ce que** les paires d'ions métallifères contenues dans le premier et dans le second électrolyte présentent le même métal.

6. Accumulateur redox-flow suivant une des revendications 1 à 5, **caractérisé en ce que** la première chambre (A) contient une solution alcaline d'un sel de manganèse avec la paire redox Mn⁴⁺/Mn²⁺ et **en ce que** la seconde chambre (B) contient une solution acide d'un sel de manganèse avec la paire redox Mn³⁺/Mn²⁺_{.}

7. Accumulateur redox-flow suivant la revendication 6, **caractérisé en ce que** la solution alcaline est de la lessive de potasse (KOH) et la solution acide est de l'acide sulfurique dilué (H₂SO₄).

8. Accumulateur redox-flow suivant une des revendications 1 à 7, **caractérisé en ce que** la première chambre (A) contient de la lessive de potasse, dans laquelle, est dissolu le sel K₂[Mn⁴⁺O₃] de l'acide de manganèse (H₂[MnO₃]) inexistant, en état non chargé de l'accumulateur redox-flow, et **en ce que** la seconde chambre (B) contient de l'acide sulfurique (H₂SO₄) dilué, dans lequel sont dissolus du sulfate de manganèse (MnSO₄), ainsi que du sulfate acide de potassium (KHSO₄), en état non chargé de l'accumulateur redox-flow.

9. Procédé de transformation d'énergie chimique en énergie électrique et d'énergie électrique en énergie chimique avec un accumulateur redox-flow suivant une des revendications 1 à 8, constitué par une première chambre (A) qui contient un premier électrolyte et une première électrode inerte, et par une seconde cambre (B) qui contient un second électrolyte et une seconde électrode inerte, la première électrode formant le pôle négatif et la seconde électrode le pôle positif, les chambres étant contiguës, les électrolytes étant séparés par une paroi commune spéciale des chambres et constitués de solutions aqueuses qui contiennent, au moins en état partiellement chargé de l'accumulateur redox-flow, des paires d'ions métallifères avec des états d'oxydation différents, des processus redox d'anions contenant du manganèse dans une solution alcaline, dans laquelle la valence des ions de manganèse varie entre les valeurs 4+ et 2+, étant provoqués à l'électrode négative et des processus redox d'anions contenant du manganèse dans une solution acide, dans laquelle la valence des ions de manganèse varie entre les valeurs 2+ et 3+, étant provoqués à l'électrode positive.

10. Procédé suivant la revendication 9, **caractérisé en ce que** pour la transformation d'énergie électrique en énergie chimique en reliant une source d'énergie aux électrodes
a) il y a conversion, à l'électrode négative, de
K₂[MnO₃] + H₂ + H₂O → K₂[Mn(OH)₄]
b) à l'électrode positive, de
2MnSO4 + 2 KHS04 + O → 2K[Mn(SO4)2] + H₂O
et **en ce que**
pour la transformation d'énergie chimique en énergie électrique en reliant une résistance ohmique de consommation aux électrodes,
c) il y a conversion, à l'électrode négative, de
K₂[Mn(O)₄] + O → ... K₂[MnO₃] + 2 H₂O
d) à l'électrode positive, de
2 K[Mn(SO₄)₂] + H₂ → 2 MnSO₄ + 2KSO₄.
